# EUROPEAN PATENT SPECIFICATION

(11) **EP 1 447 596 B1**
(45) Date of publication and mention of the grant of the patent: **21.12.2011**
(21) Application number: 04100091.0
(22) Date of filing: 13.01.2004
(51) Int. Cl.: F16H 59/04, F16H 61/30

(54) **Device for manual gearchange in a gearbox in a vehicle**
Schaltvorrichtung für ein Schaltgetriebe eines Fahrzeuges
Dispositif de passage pour boite de vitesses manuelle

(30) Priority: 12.02.2003 SE 3003787
(43) Date of publication of application: 18.08.2004
(73) Proprietor: Scania CV AB, 151 87 Södertälje (SE)
(72) Inventor: NILSSON, Hilding, 155 93, Nykvarn (SE)

(56) References cited:
- JP-A- 8 240 265
- JP-A- 63 312 547
- JP-A- 2000 027 990
- US-A- 4 287 784

## Description

### BACKGROUND TO THE INVENTION, AND STATE OF THE ART

The invention relates to a device for manual gearchange in a gearbox with the assistance of a servo device according to the preamble of claim 1.

A servo device usually comprises a servo valve which detects the direction in which a driver moves a gear lever, and an operating cylinder which may be a double-acting pneumatic cylinder with a piston which divides the cylinder into first and second spaces. In such cases the servo valve connects one space of the operating cylinder to a compressed air source so that the piston rod of the cylinder provides auxiliary force during the engagement or disengagement of a gear in the gearbox. In heavy vehicles with a relatively large gearbox, a relatively large auxiliary force from the servo device is required for the engagement or disengagement of a gear in the gearbox to be possible with a relatively small amount of manual force. For the servo device to be able to provide a large auxiliary force, the servo valve has to connect the operating cylinder to a compressed air source at a high air pressure. Connecting the operating cylinder to such a compressed air source results in a very powerful and quickly acting auxiliary force in the gearchange direction. Such sudden auxiliary force feels to the driver as if the gear lever is being pulled out of his/her hand.

US 4 287 784 and its Swedish equivalent SE 410 951 refer to an example of a gearbox with such a servo device. In that case a lower end of the gear lever is connected, via a ball joint, to a first end of a lever arm which is itself connected to a gearshift shaft and a gearshifter. The gear lever is arranged for movement in a first direction and a second direction in order to allow gearchange in the gearbox. When the gear lever is moved in the first direction, an axial motion imparted to the gearshifter, and when the gear lever is moved in the second direction, a rotary motion is imparted to the gearshifter. Moving the gear lever in the first direction requires little force and can be executed manually, whereas movement in the second direction, when a gear is to be engaged or disengaged in the gearbox, is laborious and a servo device provides auxiliary force accordingly. This servo device is dimensioned to exert a relatively small auxiliary force. Thus the aforesaid problem of a suddenly acting auxiliary force in the gear lever does not arise. Despite the servo device, a relatively large force is thus required of the driver for engaging or disengaging a gear in the gearbox.

Document JP 63 312547 A shows a device for manual gearchange in a vehicle gearbox according to the preamble of claim 1. The attenuation of the acceleration of the piston rod is achieved by incorporating an oil damper in the piston rod of the power piston of the servo device.

### SUMMARY OF THE INVENTION

The object of the present invention is to provide a device for manual gearchange in a gearbox with a servo device which provides a relatively large auxiliary force for gear engagement and disengagement in the gearbox while at the same time the driver can sense mechanical contact with the gearbox throughout the gearchange process.

The object stated above is achieved with the device mentioned in the introduction which is characterised by what is indicated in the characterising part of claim 1. For a driver to be able to change gear manually with relatively little force in a heavy vehicle, it is necessary that the valve should connect the power means to a pressure medium source at a relatively high pressure. In this situation, the power means, which is usually a pneumatic double-acting cylinder, is connected to a compressed air source at a high pressure. When a gear is being engaged, the gear lever movement is slowed for a short time during a synchronising phase. This occurs when about one-third of the gear lever movement has been executed. During that time, full pressure builds up in the servo cylinder. When said air pressure is supplied to the power means, the result is a sudden large auxiliary force in the motion- transmitting mechanism. However, the movement which the auxiliary force causes in the motion- transmitting mechanism is slowed by the damper. The auxiliary force is thus exerted considerably more slowly and the driver therefore feels no suddenly increased auxiliary force in the gear lever. With a suitably dimensioned damper, the driver can thus sense mechanical contact with the gearbox throughout the gearchange process.

According to the present invention, the damper is connected to the motion-transmitting mechanism via an element which is firmly arranged on a piston rod of the power means. The power means may thus be a pneumatic double-acting cylinder with a piston rod which moves outwards or inwards when the valve connects the compressed air source to the power means. Such connection of the damper results in immediate substantially direct damping of the movement of the piston rod. With advantage, said element comprises a first subelement which enables firm anchoring on the piston rod, at least one second subelement designed to transmit gearchange movements to a gearshift shaft, and a third subelement connected to the damper. The element thus has a multiplicity of functions. The element allows both connection to the damper so that damping is applied to the movement in the motion- transmitting mechanism, and transmission of the damped movement to the gearshift shaft. The gearshifter may comprise a firmly arranged means which allows connection to said element on the piston rod. With a suitable such means, the piston rod's linear motion is converted to rotary motion by the gearshifter. Said means may comprise a first portion which allows firm anchoring on the gearshift shaft, and a radially protruding portion which is arranged in contact with the second subelement of the element. A firmly arranged radially protruding portion results in a pivot arm by which a rotary motion can be imparted to the gearshifter when the second subelement of the element is brought into contact with said protruding portion. With advantage, the element has a subelement situated on each side of the protruding portion. The gearshifter can thus have a rotary motion in a first direction of rotation imparted to it by means of the one subelement when the piston rod is pushed outwards from the cylinder, and have a rotary motion in an opposite direction imparted to it of rotation by means of the second subelement when the piston rod is pushed inwards into the cylinder.

According to a preferred embodiment of the present invention, the damper is double-acting. In this case the damper damps movements in the motion- transmitting mechanism in both of the linear directions. With advantage, the damper is of symmetrical construction so that said movements in the motion- transmitting mechanism are damped equally. The damper is preferably hydraulic. A hydraulic damper of relatively small size may have a large damping capacity.

According to another preferred embodiment of the present invention, the damper comprises a housing with a piston which is arranged for movement and which itself comprises a first section defining a first space in the housing, a second section defining a second space, and an intermediate section situated in an intermediate space, said spaces being filled with hydraulic oil which is intended to flow out from the first space through at least one first aperture when motion in the first direction is imparted to the piston and to flow out from the second space through at least one second aperture when motion in a second direction is imparted to the piston. Depending on the size of the apertures, the damper can apply suitable damping to movements in the motion-transmitting mechanism. During the piston's movement in the damper, the volume of the first and second spaces changes. Oil from the space which is decreasing in volume can be led directly to the space which is increasing in volume. Alternatively, oil from the space which is decreasing in volume can be led first to the intermediate space before being led on to the space which is increasing in volume.

According to another preferred embodiment of the present invention, the intermediate section of the piston has a smaller circumference than the first and second sections, at least in an adjacent region, so as to form between the first and second sections a recess adapted to accommodating the third subelement of the element. Such a configuration of the piston makes it easy for the latter to be connected to a suitably shaped end portion of the third subelement of the element. The result is a firm connection between the element and the damper's piston. When auxiliary force is applied, the result is a linear movement of the piston rod of the power means, which is transmitted, via the firmly arranged element, to the damper's piston. The piston thus has imparted to it a linear motion corresponding to that of the piston rod of the power means. In this situation this linear motion is subjected to effective damping by hydraulic oil being pressed out from the space which is decreasing in volume.

According to another preferred embodiment of the present invention, the intermediate section of the piston has a first passage which connects the intermediate space and the first space, which first passage comprises a one-way valve which only allows hydraulic oil to flow to the first space, and a second passage which connects the intermediate space and the second space, which second passage comprises a one-way valve which only allows hydraulic oil to flow to the second space. Such passages enable oil to be led into the space which increases in volume during a piston movement. The one-way valve does however prevent oil from being led out through said passages. This means that the oil in the space which decreases in volume can only leave that space via the first and second apertures.

### BRIEF DESCRIPTION OF THE DRAWINGS

A preferred embodiment of the invention is described below by way of example with reference to the attached drawings, in which:
- Fig. 1: depicts schematically a gear lever and a gearbox,
- Fig. 2: depicts the motion- transmitting mechanisms for transmitting the movements of the gear lever to the gearbox,
- Fig. 3: depicts a servo valve according to the present invention,
- Fig. 4: depicts a damper arranged in the motion- transmitting mechanism,
- Fig. 5: depicts the servo valve in Fig. 3 in a first position, and
- Fig. 6: depicts the servo valve in Fig. 3 in a second position.

### DETAILED DESCRIPTION OF A PREFERRED EMBODIMENT OF THE INVENTION

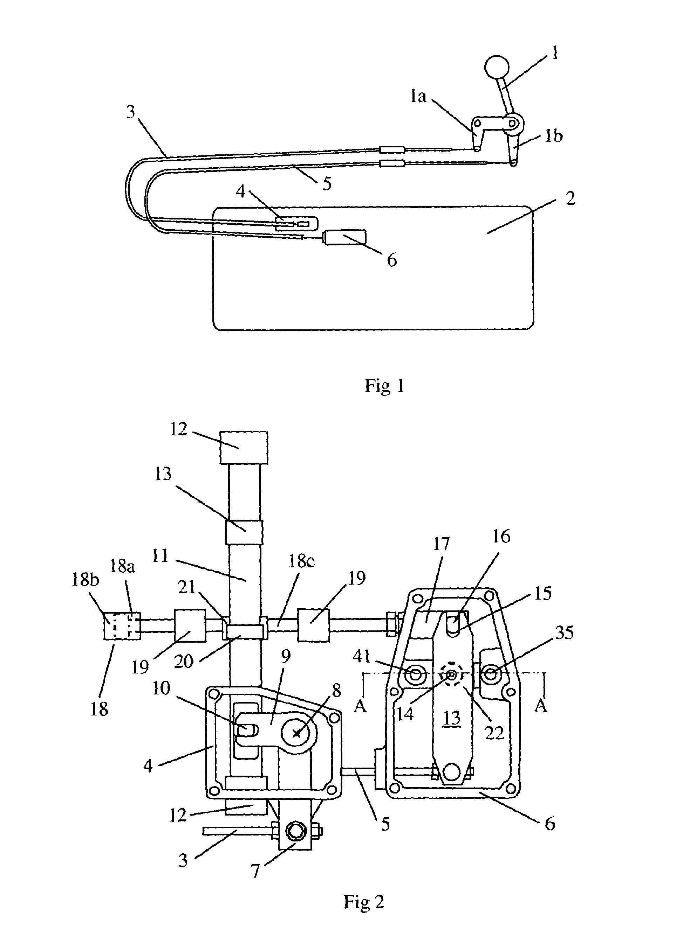

Fig. 1 depicts schematically a gear lever 1 for a gearbox 2 in a vehicle. The gear lever 1 is arranged in a conventional manner for movement to specified positions so as to enable the engagement of various gears in the gearbox 2. Movements of the gear lever 1 in the transverse direction of the vehicle are transmitted via a first motion-transmitting mechanism which comprises a first wire 3. The first wire 3 has an extent from a first lever arm 1a of the gear lever to a first housing 4 which is arranged on the gearbox 2. Movements of the gear lever 1 in the longitudinal direction of the vehicle are transmitted via a second motion- transmitting mechanism which comprises a second wire 5. The second wire 5 has an extent from a lever arm 1b of the gear lever to a second housing 6 which is arranged on the gearbox 2. Gearchange movements via the second wire 5 enable the engagement and disengagement of the various gears in the gearbox 2.

Fig. 2 depicts the first motio n-transmitting mechanism and the second motion-transmitting mechanism as viewed from above. The first motion- transmitting mechanism comprises, after the first wire 3, an arm 7. The arm 7 has a first end connected to the first wire 3 and a second end arranged for pivoting about an articulation 8. The arm 7 comprises a firmly arranged forklike means 9. The forklike means 9 is provided with a recess for accommodating a protruding element 10 which is firmly arranged on a gearshift shaft 11. The gearshift shaft 11 is supported for rotary and linear movement in at least two bearings 12 which are depicted schematically in Fig. 2. When the gear lever 1 is moved sideways, the result is a gearchange movement which is propagated via the first wire 3. The first wire 3 thus moves the arm 7 so that the latter pivots about the bearing point 8. The forklike means 9 is thus pivoted and moves the gearshift shaft 11 in an axial direction by means of the firmly arranged protruding element 10. A gearshifter 13, here viewed schematically from above, is firmly arranged on the gearshift shaft 11. The gearshifter 13, which thus effects the engagement and disengagement of gears in the gearbox 2, is arranged for movement by means of the first motion- transmitting mechanism.

The second motion- transmitting mechanism comprises, after the second wire 5, a lever arm 13 arranged in the housing 6. The lever arm 13 has a first end connected firmly to the second wire 5 and is itself supported, in an intermediate portion, for pivoting about an articulation 14. The other end of the lever arm 13 is provided with a recess 15 designed to accommodate a protruding element 16 which is firmly arranged on a cylindrically shaped clutch element 17. The clutch element 17 has at an end surface a coaxial connection with a piston rod 18c of a pneumatic double-acting cylinder 18. The piston rod 18c is connected to a piston which divides the cylinder into a first space 18a and a second space 18b. The piston rod 18c is supported for linear movement in two bearings 19. The piston rod 18c comprises a firmly arranged element 21 which is in contact with a means 20 which is itself firmly arranged on the gearshift shaft 11.

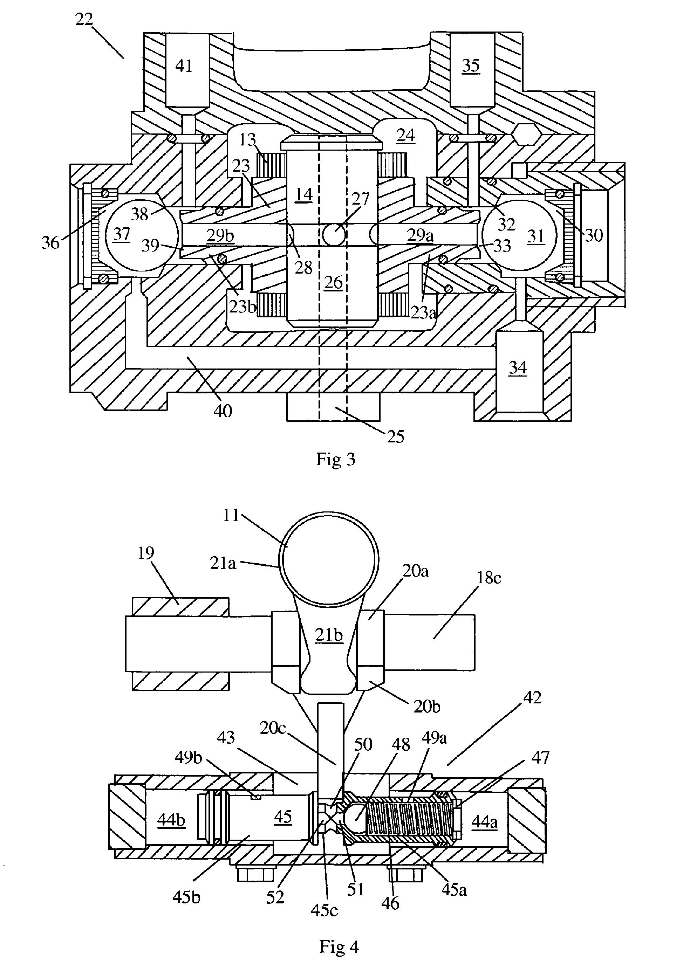

The configuration of the element 21 and the means 20 is depicted more clearly in Fig. 4. Linear motion of the piston rod 18c is converted by the element 21 and the means 20 to rotary motion of the gearshift shaft 11. Rotary motion of the gearshift shaft 11 causes corresponding rotary motion of the gearshifter 13, resulting in engagement or disengagement of a gear in the gearbox 2. However, a relatively large force is required for engaging or disengaging a gear in the gearbox 2. A servo valve 22 is therefore arranged adjacent to the lever arm 13. The servo valve 22 is designed to control the supply of compressed air to the first space 18a and the second space 18b of the cylinder 18 in order to enable activation of the piston rod 18c. Such activation provides an auxiliary force which makes it easier for the driver to engage or disengage a gear in the gearbox 2.

Fig. 3 depicts a cross- section through the valve 22 along the line A-A in Fig. 2. It shows the lever arm 13 connected to the articulation 14. The lever arm 13 is also connected to a valve piston 23 which has an extent substantially at right angles to the main extent of the lever arm 13. The articulation 14 has a substantially cylindrical shape. The valve piston 23 comprises a first end section 23a and a second end section 23b. The end sections 23a, 23b are arranged for linear movement in correspondingly shaped recesses of the valve 22. In Fig. 3, the valve piston 23 is in an intermediate neutral position. The valve 22 comprises a centrally situated cavity 24 surrounding the articulation 14. The cavity 24 is in communication with ambient air via a duct 25. The cavity 24 is therefore always full of air at the pressure of the surrounding atmosphere. The cylindrically shaped articulation 14 is provided with a centrally situated duct 26 which has an axial extent with apertures at the end surfaces. The articulation 14 also comprises at least one radial duct 27 which connects the axial duct 26 to a peripheral recess 28 which extends round the articulation 14. The valve piston 22 also comprises a first duct 29a which connects the recess 28 to an aperture in an end surface of the first end section 23a, and a second duct 29b which connects the recess 28 to an aperture in an end surface of the second end section 23b. The first duct 29a and the second duct 29b are thus always in communication with the cavity 24 and hence with ambient air.

The valve 22 comprises a first space 30 provided with a valve mechanism which itself comprises a first valve body in the form of a first ball 31, a first valve seat 32 defined by a wall surface of the space, and a second valve seat 33 defined by the aperture of the duct 29a in the first end section 23a. The first space 30 has in a lower surface an aperture to a passage 34 which is in communication with a compressed air source. The first space 30 has in an upper surface an aperture to a passage 35 which is in communication with the first space 18a of the cylinder via a suitable undepicted pipeline. The compressed air source supplies air at a positive pressure to the portion of the first space 30 which is in communication with the passage 34. The pressurised air pushes the first ball 31 against the first valve seat 32. The second valve seat 33 is situated at a distance from the first ball 31 when the valve piston 23 is in a neutral position. As the first ball 31 does not abut against the second valve seat 33, the first duct 29a is connected to the portion of the first space 30 which is connected to the passage 35 and hence to the first space 18a of the cylinder. Thus in the neutral position, no positive pressure is imparted to the air in the first chamber 18a of the cylinder.

The valve 22 also comprises a second space 36 with a valve mechanism corresponding to that of the first space 30. In this case the valve mechanism comprises a second valve body in the form of a second ball 37, a third valve seat 38 defined by a wall surface of the space 36, and a fourth valve seat 39 defined by the aperture of the duct 29b in the second end section 23b of the piston. The second space 36 has in a lower surface an aperture to a duct 40 which is in communication with the passage 34 and the compressed air source. The second space 36 has in an upper surface an aperture to a passage 41 which is in communication with the second space 18b of the cylinder via a suitable undepicted pipeline. The compressed air source thus imparts a positive pressure to the portion of the second space 36 which is in communication with the passage 41. The pressurised air in this portion of the second space 36 pushes the second ball 37 against the third valve seat 38. The fourth valve seat 39 is situated at a distance from the second ball 37 when the valve piston 23 is in a neutral position. The second duct 29b is thus connected to the portion of the second space 36 which is in communication with the passage 41 and hence to the second space 18b of the cylinder.

In the neutral position, no positive pressure is imparted to the second space 18b of the cylinder. In the neutral position, no movement of the gear lever is effected and the valve 22 therefore supplies no compressed air to the cylinder 18.

Fig. 4 depicts the motion- transmitting mechanism between the piston rod 18c and the gearshift shaft 11 in more detail. An element 20 is thus firmly arranged on the piston rod 18c. The element 20 has a first subelement 20a which enables firm anchoring on the piston rod 18c, two protruding subelements 20b each arranged on their respective sides of the gearshift shaft 11, and a third subelement 20c which has an extent downwards. The gearshift shaft 11 thus comprises a means 21 which has a first portion 21 a which enables firm anchoring to the gearshift shaft 11 and a second downward-protruding portion 21b. The downward protruding portion 21b is arranged between the element's protruding subelements 20b. A damper 42 is arranged below said motion-transmitting parts. The damper is connected to the element's third subelement 20c. The damper is hydraulic and double-acting. The damper 42 is arranged in a housing which is designed to be filled with suitable hydraulic oil. The damper 42 has a symmetrical structure and comprises a first space 44a, a second space 44b and an intermediate space 43, all of which are intended to be filled with oil. The damper 42 comprises a damper piston 45 which is arranged with a first section 45a in the first space 44a and a second section 45b in the second space 44b. The first section 45a is depicted with close hatching in Fig. 4. The damper piston's first section 45a and second section 45b each have an internal space in which a coil spring 46 is arranged. The spring 46 has an extent between an annular rear portion 47 and a forward ball 48. The rear portion is open so that the spaces inside the piston sections 45a, b form part of the first space 44a and the second space 44b respectively. The first piston section 45a and the second piston section 45b each have an aperture 49a, b which allows oil to flow from the first internal space 44a and the second internal space 44b respectively to the intermediate space 43. The piston 45 has a middle section 45c which connects together the first section 45a and the second section 45b. The middle section 45c has a smaller circumference than the connecting surfaces of the first section 45a and the second section 45b, resulting in the formation between the first section 45a and the second section 45b of a space which is adapted to accommodating the lower part of the third subelement 20c. The middle section 45c is provided with a radial passage 50. From the radial passage 50, a first axial passage 51 extends to the first space 44a to allow supply of oil from the intermediate space 43 to the first space. In this situation, the spring 46, the annular rear portion 47 and the ball 48 form a check valve which prevents any flow of oil in an opposite direction through the first axial passage 51. From the radial passage 50, a second axial passage 52 extends to the second space 44b to allow supply of oil from the intermediate space 43 to the second space 44b. In this case a corresponding spring 46, annular rear section 47 and ball 48 form a second check valve which prevents any flow of oil in an opposite direction through the second axial passage 52.

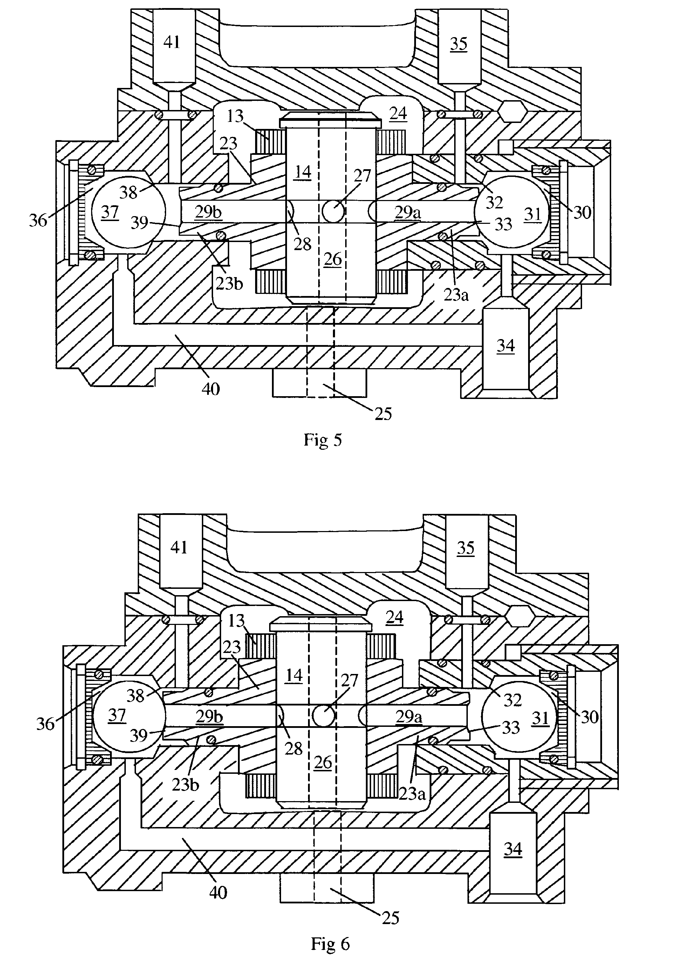

A driver of the vehicle who has to disengage a gear in the gearbox 2 executes a gearchange movement of the gear lever 1 in the longitudinal direction of the vehicle. The movement of the gear lever is then propagated by the second wire means 5 to the lever arm 13. The wire 5 thereupon endeavours to pivot the lever arm 13 about the articulation 14. As disengaging a gear in the gearbox 2 requires a certain force, there is in this situation a resistance to such a pivoting movement at the opposite end of the lever arm 13. The articulation 14, which is connected to the valve piston 23, is thereby pushed a short distance to the right from the neutral position to a first position illustrated in Fig. 5. The first stage of this movement from the neutral position to the first position causes the piston's first end section 23a to reach the first ball 31. The first ball 31 thereby comes to abut closely against the second valve seat 33 situated at the first end section 23a of the piston. The communication of the passage 35 with ambient air therefore ceases. Thereafter the valve piston 23 moves a further short distance so that it pushes the first ball 31 off the first valve seat 32. The valve piston 23 is now in the first position. The first position allows compressed air from the passage 34 to flow past the first ball 31 and through the now open first valve seat 32. As the valve piston's first end section 23a has a tapering front portion, compressed air can be led externally about said front portion to the passage 35, which is thus connected to the cylinder's first space 18a. In this situation the cylinder 18 pushes the piston rod 18c to the left in Fig. 2. The element 20 firmly arranged on the piston rod 18c transmits the motion of the piston rod 18c via the protruding means 20b to the downward-protruding second portion 21b of the means 21. A rotary movement is thus imparted both to the second portion 21b and to the gearshift shaft 11. A corresponding rotary movement which causes disengagement of said gear in the gearbox 2 is imparted to the gearshifter 13 arranged on the gearshift shaft 11. Compressed air is supplied to the cylinder' first space 18a so long as the driver initiates continuing movement of the gear lever 2 in the direction for disengaging said gear.

Before the driver can engage a different gear in the gearbox 2, it is frequently necessary that the gearshifter 13 be first moved in an axial direction. To this end, the driver executes a movement of the gear lever 2 in a transverse direction. This movement is transmitted by the first wire means 3 to the arm 7. The arm 7 pivots about the bearing point 8 so that the forklike means 9 moves the gearshift shaft 11 in an axial direction by means of the firmly arranged protruding element 10. This gearchange movement is relatively easy to execute and therefore requires no servo device to provide auxiliary force. When axial motion to a desired position has been imparted to the gearshift shaft 11, the driver executes a movement of the gear lever 1 in order to engage a desired gear in the gearbox 2. This movement is propagated via the second motion-transmitting mechanism in a manner corresponding to the disengaging of a gear. However, this movement is in a direction such that the lever arm 13 endeavours to pivot about the articulation 14 in an opposite direction. As engaging a gear in the gearbox 2 requires a certain force, here again there is resistance at the opposite end of the lever arm 13 to such a pivoting movement. The articulation 14, which is connected to the valve piston 23, is thereby moved a short distance to the left from the neutral position to a second position illustrated in Fig. 6. During this movement the second end section 23b of the piston reaches the second ball 37. The second ball 37 thereupon comes to abut closely against the fourth valve seat 39 situated at the second end section 23b of the piston. Communication of the passage 41 with ambient air therefore ceases. The valve piston 23 thereafter moves a further distance so that it lifts the second ball 37 off the third valve seat 38. The valve piston 23 is now in the second position. The second position allows compressed air from the passage 39 to flow past the second ball 37 and through the now open third valve seat 38. As the second end section 23b of the valve piston has a tapering front portion, compressed air can be led externally about said front portion to the passage 41, which is thus connected to the cylinder's second space 18b. The cylinder 18 pushes the piston rod 18c to the right in Fig. 2 and thereby exerts auxiliary force for transmitting the gearchange movement initiated by the driver. The protruding subelements 20b of the element 20 firmly arranged on the piston 18c transmit the movement to the downward-protruding second portion 21b of the means 21. Rotary motion is thus imparted both to the second portion 21b and to the gearshift shaft 11. A corresponding rotary motion is imparted to the gearshifter 13 and the result is engagement of the gear in the gearbox 2. Compressed air is supplied to the cylinder's second space 18b so long as the driver initiates continuing movement of the gear lever 1 in the direction for engaging said gear.

The compressed air source has a relatively high pressure, which means that the auxiliary force which the cylinder 18 supplies to the second motion-transmitting mechanism may be too powerful and rapid without the damper 42 depicted in Fig. 4. The damper 42 is therefore connected to the element 20 which is firmly arranged on the piston rod 18c via the downward-extending third subelement 20c. When linear motion is imparted to the piston rod 18c, a corresponding linear motion is imparted to the third subelement 20c. For example, when the piston rod 18c moves to the right, a corresponding movement to the right is imparted to the third subelement 20c. The third subelement 20c thereupon also moves the damper piston 45 to the right. The pressure in the hydraulic oil in the first space 44a increases. The increased pressure causes hydraulic oil to be pushed out through the passage 49a while at the same time the ball 48 is pushed forwards and closes the first passage 51. The size of the passages 49a, b determines the damper' capacity. The pressure of the hydraulic oil in the second space 44b decreases correspondingly during said linear movement. The reduced pressure causes the second passage 52 to open so that hydraulic oil can flow in from the intermediate space 43 to the second space 44b. The second passage thus also has an undepicted ball which allows oil to pass when a negative pressure prevails in the second space 44b. A smaller amount of hydraulic oil is also supplied to the second space 44b via the passage 49 of the second section 45b. The resistance of the damper 42 to the gearchange movement causes reduction of the auxiliary force exerted by the cylinder 18. With a suitable choice of damper 42, the driver can be provided with a gearchange sensation which makes him/herself feel mechanical contact between the gear lever 1 and the gearbox 2.

It should be noted that entirely manual gearchange by means of the gear lever 1 can be executed with the second motion- transmitting mechanism even if for any reason the valve 22 or the cylinder 18 is out of action. It requires a relatively large amount of force but is certainly possible.

The invention is in no way limited to the embodiment described but may be varied freely within the scopes of the claims. The damper may be used in conjunction with substantially any desired mechanical motion-transmitting mechanism between a gear lever and a gearbox. The servo device which provides auxiliary force when a gear has to be engaged or disengaged in the gearbox may also be of substantially any desired design.

## Claims

1. A device for manual gearchange in a gearbox (2) in a vehicle, which device comprises a gear lever (1) and a motion-transmitting mechanism designed to transmit gearchange movements of the gear lever (1) to the gearbox (2), a pressure-medium-controlled power means (18) connected to the motion-transmitting mechanism, and a valve (22) which during the engagement and disengagement of a gear in the gearbox is designed to connect the power means (18) to a first pressure medium source so that the power means (18) provides auxiliary force for the gearchange movement, the device comprises a damper (42) which is connected to the motion-transmitting mechanism, the damper (42) is connected to the motion-transmitting mechanism via an element (20) which is firmly arranged on a piston rod (18c) of the power means **characterised in that** said element (20) comprises a first subelement (20a) which allows firm anchoring on the piston rod (18c), at least one second subelement (20b) designed to transmit gearchange movements to a gearshift shaft (11), and a third subelement (20c) which is connected to the damper (42).

2. A device according to claim 1, **characterised in that** the gearshifter (11) comprises a firmly arranged means (21) which enables connection to said element (20) on the piston rod (18c).

3. A device according to claim 1 or 2, **characterised in that** said means (21) comprises a first portion (21a) which allows firm anchoring on the gearshift shaft (11) and a radially protruding portion (21b) which is arranged in contact with the element's second subelement (20b).

4. A device according to any one of the foregoing claims, **characterised in that** the damper (42) is double-acting.

5. A device according to any one of the foregoing claims, **characterised in that** the damper (42) is hydraulic.

6. A device according to any one of the foregoing claims, **characterised in that** the damper comprises a housing, with a piston (45) which is arranged for movement and which comprises a first section (45a) defining a first space (44a) in the housing, a second section (45b) defining a second space (44b), and an intermediate section (45c) situated in an intermediate space (43), said spaces (44a, b, 43) being filled with hydraulic oil which is intended to flow out from the first space (44a) through at least one first aperture (49a) when motion in a first direction is imparted to the piston (45) and to flow out from the second space (44b) through at least one second aperture (49b) when motion in a second direction is imparted to the piston (45).

7. A device according to claim 6, **characterised in that** the piston's intermediate section (45c) has a smaller circumference than the first section (45a) and the second section (45b) at least in an adjacent region so as to form between the first section (45a) and the second section (45b) a recess adapted to accommodating the element's third subelement (20c).

8. A device according to claim 7, **characterised in that** the piston's intermediate section (45c) has a first passage (51) extending between the intermediate space (43) and the first space (44a), which first passage (51) comprises a one-way valve (46-48) which only allows hydraulic oil to flow to the first space (44a), and a second passage (52) extending between the intermediate space (43) and the second space (44b), which second passage (52) comprises a one-way valve (46-48) which only allows hydraulic oil to flow to the second space (44a).

## Patentansprüche

1. Vorrichtung zum manuellen Gangwechsel in einem Getriebe (2) in einem Fahrzeug, wobei die Vorrichtung einen Schalthebel (1) und einen Bewegungsübertragungsmechanismus, der zum Übertragen von Gangwechselbewegungen des Schalthebels (1) zu dem Getriebe (2) ausgebildet ist, ein druckmedium-gesteuertes Antriebsmittel (18), das mit dem Bewegungsübertragungsmechanismus verbunden ist, und ein Ventil (22) aufweist, das während des Ineingriffstehens und Außereingriffstehens eines Gangs in dem Getriebe dazu ausgebildet ist, das Antriebsmittel (18) mit einer ersten Druckmediumquelle derart zu verbinden, dass das Antriebsmittel (18) eine Zusatzkraft für Gangwechselbewegungen bereitstellt, wobei die Vorrichtung einen Dämpfer (42) aufweist, der mit dem Bewegungsübertragungsmechanismus verbindbar ist, wobei der Dämpfer (42) mit dem Bewegungsübertragungsmechanismus über ein Element (20) verbindbar ist, das fest an einer Kolbenstange (18c) des Antriebsmittels angeordnet ist,
**dadurch gekennzeichnet, dass** das Element (20) ein erstes Unterelement (20a), das ein festes Verankern mit der Kolbenstange (18c) zulässt, wenigstens ein zweites Unterelement (20b), das zum Übertragen von Gangwechselbewegungen zu einer Gangwechselwelle (11) ausgebildet ist, und ein drittes Unterelement (20d) aufweist, das mit dem Dämpfer (42) verbunden ist.

2. Vorrichtung nach Anspruch 1,
**dadurch gekennzeichnet, dass** der Gangwechsler (11) ein fest angeordnetes Mittel (21) aufweist, das eine Verbindung zu dem Element (20) an der Kolbenstange (18c) ermöglicht.

3. Vorrichtung nach einem der Ansprüche 1 oder 2,
**dadurch gekennzeichnet, dass** das Mittel (21) einen ersten Abschnitt (21a), der eine feste Verankerung mit der Gangwechselwelle (11) zulässt, und einen radial vorspringenden Abschnitt (21b) umfasst, der mit dem zweiten Unterelement (20b) des Elements in Kontakt steht.

4. Vorrichtung nach einem der voranstehenden Ansprüche,
**dadurch gekennzeichnet, dass** der Dämpfer (42) zweifach wirkend ist.

5. Vorrichtung nach einem der voranstehenden Ansprüche,
**dadurch gekennzeichnet, dass** der Dämpfer (42) hydraulisch ist.

6. Vorrichtung nach einem der voranstehenden Ansprüche,
**dadurch gekennzeichnet, dass** der Dämpfer ein Gehäuse mit einem Kolben (45) aufweist, der zum Bewegen angeordnet ist und einen ersten Bereich (45a), der einen ersten Raum (44a) in dem Gehäuse festlegt, einen zweiten Bereich (45b), der einen zweiten Raum (44b) festlegt, und einen Zwischenbereich (45c) aufweist, der in einem Zwischenraum (43) vorgesehen ist, wobei die Räume (44a, b, 43) mit einem hydraulischen Öl gefüllt sind, das aus dem ersten Raum (44a) wenigstens durch eine erste Öffnung (49a) strömt, wenn eine Bewegung in einer ersten Richtung auf den Kolben (45) übertragen wird, und zum Strömen aus dem zweiten Raum (44b) durch wenigstens eine zweite Öffnung (49b) veranlasst wird, wenn eine Bewegung in einer zweiten Richtung auf den Kolben (45) übertragen wird.

7. Vorrichtung nach Anspruch 6,
**dadurch gekennzeichnet, dass** der Zwischenbereich (45c) wenigstens in einer benachbarten Region einen kleineren Umfang aufweist als der erste Bereich (45a) und der zweite Bereich (45b), um zwischen dem ersten Bereich (45a) und dem zweiten Bereich (45b) eine Ausnehmung zu bilden, die zum Aufnehmen des dritten Unterelements (20c) des Elements ausgebildet ist.

8. Vorrichtung nach Anspruch 7,
**dadurch gekennzeichnet, dass** der Zwischenbereich (45c) des Kolbens einen ersten Durchgang (51) aufweist, der sich zwischen dem Zwischenraum (43) und dem ersten Raum (44a) erstreckt, wobei der erste Durchgang (51) ein Einwegventil (46 bis 48) umfasst, das nur einen Strom des hydraulischen Öls zu dem ersten Raum (44a) zulässt, und einen zweiten Durchgang (52), der sich zwischen dem Zwischenraum (43) und dem zweiten Raum (44b) erstreckt, wobei der zweite Durchgang (52) ein Einwegventil (46 bis 48) umfasst, das nur einen Strom des hydraulischen Öls in dem zweiten Raum (44a) zulässt.

## Revendications

1. Dispositif pour le changement manuel des rapports dans une boîte de vitesse (2) d'un véhicule, lequel dispositif comprend un levier de vitesse (1) et un mécanisme de transmission de mouvement conçu pour transmettre des mouvements de changement de rapport du levier de vitesse (1) de la boîte de vitesse (2), un moyen de puissance commandé par fluide sous pression (18) connecté au mécanisme de transmission de mouvement, et une valve (22) qui, pendant l'engagement et le désengagement d'un rapport dans la boîte de vitesse, est conçue pour connecter le moyen de puissance (18) à une première source de fluide sous pression, de telle sorte que le moyen de puissance (18) produise une force auxiliaire pour le mouvement de changement de rapport, le dispositif comprenant un amortisseur (42) qui est connecté au mécanisme de transmission de mouvement, l'amortisseur (42) étant connecté au mécanisme de transmission de mouvement via un élément (20) qui est monté fixement sur une tige de piston (18c) du moyen de puissance, **caractérisé en ce que** ledit élément (20) comprend un premier sous-élément (20a) qui permet un ancrage fixe sur la tige de piston (18c), au moins un deuxième sous-élément (20b) conçu pour transmettre les mouvements de changement de rapport à un arbre de transmission (11), et un troisième sous-élément (20c) qui est connecté à l'amortisseur (42).

2. Dispositif selon la revendication 1, **caractérisé en ce que** l'organe de transmission (11) comprend un moyen monté fixement (21), qui permet la connexion audit élément (20) sur la tige de piston (18c).

3. Dispositif selon la revendication 1 ou 2, **caractérisé en ce que** ledit moyen (21) comprend une première partie (21a) qui permet un ancrage fixe sur l'arbre de transmission (11) et une partie saillant radialement (21 b) qui est montée en contact avec le deuxième sous-élément (20b) de l'élément.

4. Dispositif selon l'une quelconque des revendications précédentes, **caractérisé en ce que** l'amortisseur (42) est à double effet.

5. Dispositif selon l'une quelconque des revendications précédentes, **caractérisé en ce que** l'amortisseur (42) est hydraulique.

6. Dispositif selon l'une quelconque des revendications précédentes, **caractérisé en ce que** l'amortisseur comprend un logement, avec un piston (45) qui est monté à déplacement et qui comprend une première section (45a) définissant un premier espace (44a) dans le logement, une deuxième section (45b) définissant un deuxième espace (44b), et une section intermédiaire (45c) située dans un espace intermédiaire (43), lesdits espaces (44a, b, 43) étant remplis d'une huile hydraulique qui est destinée à s'écouler hors du premier espace (44a) à travers au moins une première ouverture (49a) lorsque un mouvement dans une première direction est imprimé au piston (45) et à s'écouler hors du deuxième espace (44b) à travers au moins une deuxième ouverture (49b) lorsqu'un mouvement dans une deuxième direction est imprimé au piston (45).

7. Dispositif selon la revendication 6, **caractérisé en ce que** la section intermédiaire (45c) du piston a une circonférence de plus petite taille que celle de la première section (45a) et de la deuxième section (45b), au moins dans une région attenante, de façon à former entre la première section (45a) et la deuxième section (45b) un évidement adapté pour recevoir le troisième sous-élément (20c) de l'élément.

8. Dispositif selon la revendication 7, **caractérisé en ce que** la section intermédiaire (45c) du piston a un premier passage (51) s'étendant entre l'espace intermédiaire (43) et le premier espace (44a), lequel premier passage (51) comprend une valve anti-retour (46-48) qui permet à l'huile hydraulique de s'écouler uniquement vers le premier espace (44a), et un deuxième passage (52) s'étendant entre l'espace intermédiaire (43) et le deuxième espace (44b), lequel deuxième passage (52) comprend une valve anti-retour (46-48) qui permet à l'huile hydraulique de s'écouler uniquement vers le deuxième espace (44a).
